(19)

Europäisches
Patentamt
European
Patent Office
Office européen
des brevets

(11)     **EP 4 246 407 A1**

(12)     # EUROPEAN PATENT APPLICATION

(43) Date of publication:
**20.09.2023  Bulletin 2023/38**

(21) Application number: **23161328.2**

(22) Date of filing: **10.03.2023**

(51) International Patent Classification (IPC):
**G06Q 30/0202** (2023.01)     **G06Q 30/0207** (2023.01)

(52) Cooperative Patent Classification (CPC):
**G06Q 30/0202; G06Q 30/0215; G06Q 30/0224**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **17.03.2022  US 202217697724**

(71) Applicant: **Mastercard International Incorporated
Purchase NY 10577 (US)**

(72) Inventors:
  • **SINGH, Alok
    Gurgaon (IN)**
  • **LEE, Alvin
    Orlando (US)**

  • **CHAURASIYA, Deepak
    New Delhi (IN)**
  • **SURISETTY, Anil Kumar
    Visakhapatnam (IN)**
  • **CHUANG, I-Hsin
    Brooklyn (US)**
  • **BRAGARD, Quentin
    Espoo (FI)**
  • **SHAJU, Shiny John
    Kota (IN)**
  • **FLINTER, Stephen Patrick
    Dublin (IE)**

(74) Representative: **Barker Brettell LLP
    100 Hagley Road
    Edgbaston
    Birmingham, West Midlands B16 8QQ (GB)**

(54)     **SYSTEM AND METHOD FOR PREDICTING TRANSACTIONAL BEHAVIOR IN A NETWORK**

(57)     An aspect of the present disclosure is drawn to a method for managing a payment network, including: learning a transaction pattern of an account over time; generating a transfer function based on the transaction pattern; predicting information for the account based on the density function; changing a state of the account based on the predicted information; and automatically transmitting a notification of a feature to an owner of the account based on the changing of the state of the account, wherein the transfer function is a probability density function of a neural network and wherein the information includes a time of a future transaction linked to a correlated marker of the payment network.

FIG. 1

EP 4 246 407 A1

**Description**

FIELD

One or more embodiments described herein relate to processing information to generate modeled predictions in a network (e.g., payment network).

BACKGROUND

Loyalty programs that provide benefits to cardholders increases trust in credit card companies and other financial entities. However, loyalty offers and other incentives are often extended to customers who have demonstrated no interest in the good or services related to those offers. This provides cardholders with a sub-optimal user experience and diminishes the scope of increasing customer engagement.

SUMMARY

An aspect of the present disclosure is drawn to a method for managing a payment network, including: learning a transaction pattern of an account over time; generating a transfer function based on the transaction pattern; predicting information for the account based on the density function; changing a state of the account based on the predicted information; and automatically transmitting a notification of a feature to an owner of the account based on the changing of the state of the account, wherein the transfer function is a probability density function of a neural network and wherein the information includes a time of a future transaction linked to a correlated marker of the payment network.

In some embodiments, learning the transaction pattern includes learning a distribution of an expenditure pattern relating the account over time.

In some embodiments, the method further includes training the probability density function by: providing information related to a cardholder of the account transacting at time t; providing information related to a merchant being transacted at by the cardholder at time t; and providing a context of the cardholder and the merchant at time t.

In some embodiments, predicting the information includes predicting transactions behavior of the account during a period.

In some embodiments, changing the state of the account includes linking the account to a vector attribute of the future transaction for the correlated marker. In some of these embodiments, the feature includes at least one of a discount, offer, conditional reward, or incentive of a merchant corresponding to the correlated marker.

In some embodiments of this aspect, the correlated marker corresponds to a merchant category code (MCC) of the payment network.

In some embodiments of this aspect, the offer is an existing or future offer provided by a merchant in the MCC corresponding to the correlated marker.

Another aspect of the present disclosure is drawn to a system for managing a payment network, including: a memory configured to store instructions of a predictor model; and a transaction manager configured to execute the instructions to: learn a transaction pattern of an account over time; generate a transfer function based on the transaction pattern; predict information for the account based on the density function; change a state of the account based on the predicted information; and automatically transmit a notification of a feature to an owner of the account based on the changing of the state of the account, wherein the transfer function is a probability density function of a neural network and wherein the information includes a time of a future transaction linked to a correlated marker of the payment network.

In some embodiments, the transaction manager is configured to execute the instructions to additionally learn the transaction pattern by learning a distribution of an expenditure pattern relating the account over time.

In some embodiments, the transaction manager is configured to execute the instructions to additionally train the probability density function by: providing information related to a cardholder of the account transacting at time t; providing information related to a merchant being transacted at by the cardholder at time t; and providing a context of the cardholder and the merchant at time t.

In some embodiments, the transaction manager is configured to execute the instructions to additionally predict the information by predicting transactions behavior of the account during a period

In some embodiments, the transaction manager is configured to execute the instructions to additionally change the state of the account by linking the account to a vector attribute of the future transaction for the correlated marker. In some of these embodiments, the feature includes at least one of a discount, offer, conditional reward, or incentive of a merchant corresponding to the correlated marker.

In some embodiments of this aspect, the correlated marker corresponds to a merchant category code (MCC) of the payment network.

In some embodiments of this aspect, the offer is an existing or future offer provided by a merchant in the MCC corresponding to the correlated marker.

Another aspect of the present disclosure is drawn to a non-transitory, computer-readable media having computer-readable instructions stored thereon, the computer-readable instructions being capable of being read by a transaction manager configured to execute instructions stored on a memory, wherein the computer-readable instructions are capable of instructing the transaction manager to perform the method including: learning a transaction pattern of an account over time; generating a transfer function based on the transaction pattern; predicting information for the account based on the density function; changing a state of the account based on the predicted information; and automatically transmitting a notification of a feature to an owner of the account based on the changing of the state of the account, wherein the transfer function is a probability density function of a neural network and wherein the information includes a time of a future transaction linked to a correlated marker of the payment network.

In some embodiments, the computer-readable instructions are capable of instructing the transaction manager to perform the method wherein learning the transaction pattern includes: learning a distribution of an expenditure pattern relating the account over time.

In some embodiments, the computer-readable instructions are capable of instructing the transaction manager to perform the method further including training the probability density function by: providing information related to a cardholder of the account transacting at time t; providing information related to a merchant being transacted at by the cardholder at time t; and providing a context of the cardholder and the merchant at time t.

In some embodiments, the computer-readable instructions are capable of instructing the transaction manager to perform the method wherein predicting the information includes predicting transactions behavior of the account during a period.

In some embodiments, the computer-readable instructions are capable of instructing the transaction manager to perform the method wherein changing the state of the account includes linking the account to a vector attribute of the future transaction for the correlated marker. In some of these embodiments, the feature includes at least one of a discount, offer, conditional reward, or incentive of a merchant corresponding to the correlated marker.

In some embodiments of this aspect, the correlated marker corresponds to a merchant category code (MCC) of the payment network.

In some embodiments of this aspect, the offer is an existing or future offer provided by a merchant in the MCC corresponding to the correlated marker.

## BRIEF DESCRIPTION OF THE DRAWINGS

FIG. 1 shows an embodiment of a transaction analyzer.
FIG. 2 shows an embodiment of a predictor model.
FIG. 3 shows an embodiment of a method for training a model based on merchant-related information.
FIG. 4 represents an embodiment of the density learning model.
FIG. 5 shows an example of using the transaction analyzer in a loyalty program.

## DETAILED DESCRIPTION

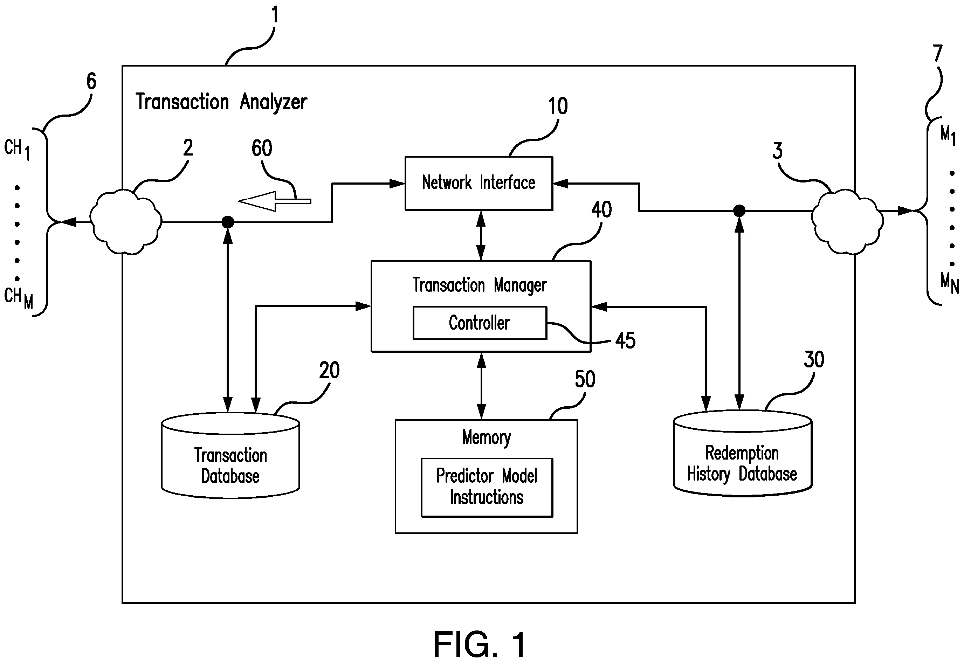

FIG. 1 shows an embodiment of a transaction analyzer 1 which processes information to generate modeled predictions in a network which, for example, may include the payment network of a credit card company or other financial entity. The predictions may be used as a basis of increasing efficiency and productivity of the network, as well as allow the network to better serve its participating entities in transacting business.

The transaction analyzer 1 may be coupled between a first network 2 and a second network 3. The first network 2 allows communications to take place between at least a first set of entities 6, and the second network 3 allows communications to take place between a second set of entities 7. When the payment network is a credit card company, the first set of entities may be cardholders $CH_1$ to $CH_M$ who have accounts within the network, and the second set of entities may be merchants M1 to $M_N$ (or vendors) who are participating members of the payment network, i.e., who accept cards from the credit card company as payment for goods and services. For purposes of illustration, the payment network will be discussed as corresponding to a credit card company with the understanding that the network may belong to other types of companies or entities in different embodiments.

Referring to FIG. 1, the transaction analyzer 1 includes at least one network interface 10, a transaction database 20, a redemption history database 30, a transaction manager 40, and a memory 50. While the transaction database 20 and redemption history database 30 are shown to be separate, in another embodiment the information in these databases may be stored in a single database. Also, in one embodiment the transaction analyzer 1 may be coupled to these database(s). In such a case, the database(s) may not be included in the transaction analyzer 1.

The network interface 10 receives and transmits various types of account-related information from/to the cardholders $CH_1$ to $CH_M$ through the first network 2. Non-limiting example types of account-related information include credit card authorization information, monthly bills with account balances, membership information, promotional offers, opportunities to redeem rewards, adjustments in credit limit, and other types of information relating to the accounts of the cardholders. This information may be stored in the transaction database 40 or another data storage location of the credit card company.

Additionally, the network interface 10 may receive account-related information from the merchants M1 to $M_N$ through the second network 3. Non-limiting example types of account-related information include all transactions presented for payment by the cardholders, whether or not those transactions were approved, and also all details relating to the transaction. These details include, but are not limited to, the amount of the transaction, the date and time of the transaction, and the identity of the merchant and the merchant location, data indicating whether the transaction was made pursuant to an offer, reward or discount, as well as other associated data. Additional types of account-related information are described below. The merchants M1 to $M_N$ may include online merchants as well as those at retail stores and other brick-and-mortar locations.

The transaction database 20 may store the account-related information in the payment network. For example, each time a transaction is presented for payment, corresponding information may be received from the merchant and the card presented by the cardholder and stored in the transaction database. The transaction database 20 may therefore track all account activity of the cardholders in respect to card use, the types of purchases being made, the times the purchases are being made and the types of merchants involved.

The redemption history database 30 may store information corresponding to all offers, discounts, rewards, and loyalty programs in which cardholders participated in in the past. In addition to the information stored in transaction database 20, the redemption history information stored in redemption history database 30 helps to give context to the purchases made by the cardholders, including providing an indication of which merchants and types of products or services are of particular interest relating to each cardholder account.

The transaction manager 40 may control the generation of predictions based on the account-related information stored in the transaction database and/or the redemption history database 30. For example, the transaction manager 40 may include a controller 45 which implements a model to generate predictions of the type(s) of future transactions cardholders may engage in, especially in the context of offers, rewards, and discounts extended by the credit card company in connection with a loyalty rewards campaign and/or extended from participating merchants within the payment network. These predictions may then be used as a basis for the credit card company to correlate merchants with cardholders, for example, during the loyalty campaign of the credit card company or otherwise during a period when the credit card company and/or merchants provide various types of offers, discounts, reduced- or zero-percent financing, or other benefits to its customers. All of the rewards, discounts, loyalty campaigns, etc., all of which may be referred to as incentives.

The memory 50 may be any non-transitory computer-readable medium that stores instructions which, when executed by controller 45, implements a predictor model as described herein. In addition to the model instructions, the memory 50 may store other instructions for execution by the controller 45 of the transaction manager 40 to manage operations of the transaction analyzer 1. Embodiments of the model and how the transaction manager 1 implements this model to generate the predictions and other information described herein are discussed below.

In one embodiment, the model may be implemented as a classifier and a predictor. In order to function in this manner, the model may be trained based on datasets that configure the model to classify transactions and make predictions that link payment network accounts (e.g., cardholder accounts) to specific merchants for incentives. For example, the model may implement a temporal point process to generate outputs based on a time-series of events that occur over time. The temporal point process may use, for example, a gated recurrent neural network (RNN) to predict the times of future transactions for payment network accounts across one or more markers. The markers may be used as a basis to identify and/or categorize participating merchants in the network, for example, using merchant category codes (MCC) of the credit card company.

In one embodiment, the RNN model be a long short-term memory (LSTM) recurrent neural network. An LSTM RNN is a type of deep-learning technique that uses a trained probability density function to predict, in this case, future transactions that are likely to occur at merchants and their corresponding transaction amount bin and specific accounts in the network. Based on these predictions, actions can be taken preemptively to target account holders with incentives within the payment network they otherwise would not have had or known about. The predictions may also filter out potentially irrelevant information (e.g., spam), e.g., incentives relating to merchants which an account holder has demonstrated no interest in in the past based on transactional and redemption history. Spam offers serve as a constant source of inconvenience to account holders and reduce productivity. Thus, the ability to target incentives to relevant account holders inures both to the benefit of the account holders and merchants, and also to the credit card company through an increase in loyalty of its card users.

The following embodiments will be discussed in the context of an LSTM RNN with the understanding that a different type of model may be used to implement the neural network in other embodiments.

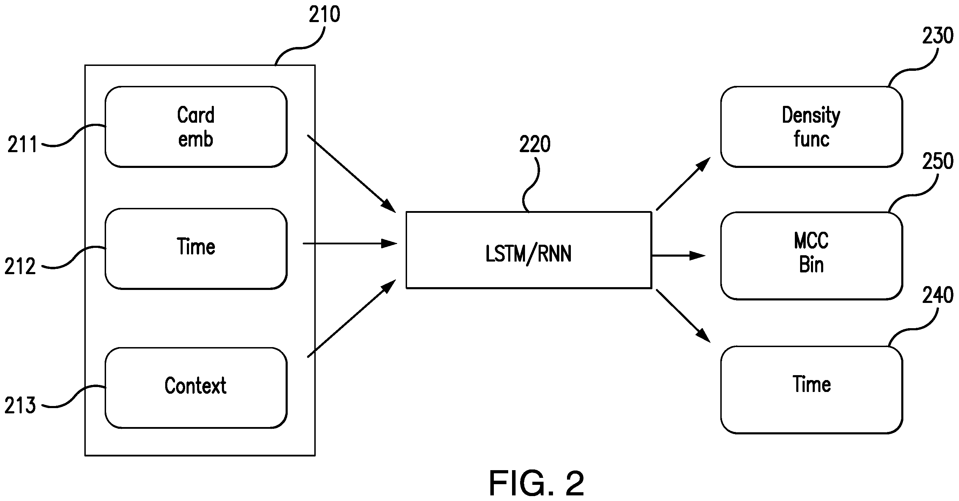

FIG. 2 illustrates an embodiment showing an example of how the predictor model may be trained for accounts in the payment network. The training may be performed based on one or more datasets derived, in part, from the transaction history stored in transaction database 20 in relation to one or more associated markers and the redemption history stored in redemption history database 30 in relation to these marker and other associated information.

Referring to FIG. 2, the datasets 210 may input to train the probability density function of the neural network on an account-by-account basis, or datasets for multiple accounts (even numbering in the thousands or even millions) may be input to train the density function simultaneously, continuously, or intermittently for these accounts across all or a portion of the markers in the payment network. In this latter case, a single model is trained to generate predictions for the entire network, which is more economical and efficient.

In one embodiment, the datasets may be derived from information stored in the transaction database 20 and the redemption history database 30, which information may include the following serving as inputs into the LSTM RNN: card-embedding information 211, time information 212, and context information 213. This information may include data corresponding to various transactions and events that have taken place in the past relating to the account(s) of interest. The data is used to train the density function in order to make the predictions described herein.

The card-embedded information 211 is information embedded in the card. Non-limiting examples of the types of card-embedded information include information about merchants transacted at by a card, ticket size of those transaction, its product category, lifetime values (for instance, expenditure of that card in POS), and combinations thereof.

The time information 212 may indicate the times and dates of past transactions relating to the account of each cardholder. The times may also indicate the time of season or year the transaction took place. The time of season or year may be relevant in terms of whether a holiday was in effect at that time and whether that time tracked a pattern or marketing behavior of a related cardholder or merchant incentive activity, as well as other data. The time information may be related to the card-embedding information and corresponds to the timestamp of each transaction occurring between the concerned cardholder and a merchant. The time information denotes the timestamp of a cardholder's transaction whereas the card-embedded information stores historical transaction information of that card.

The context information 213 may include data indicating the context of each transaction stored in the transaction database. The context information 213 describes the loyalty environment of a card at the time of transaction. In a non-limiting example embodiment, for a cardholder (C) transacting at merchant (M) at time T, the context information 213 may include, the offer available to C at time T, how close C is to be eligible for that offer, number of days since C was last reminded about that offer and percentage of times such an offer has been availed by that particular cardholders. For example, the context information 213 may indicate whether the account holder made a related purchase pursuant to a certain incentive. For example, in one implementation, the context information 213 may allow the neural network to determine whether past expenditure patterns were conditioned on loyalty offers, rewards, merchant discounts, and other incentives in the past.

As to how the context information 213 relates to the card-embedded information 211, the context information 213 for a card at some merchant at time T represents the loyalty environment of the involved card and merchant at that time. The context information 213 is dynamic information which changes with time depending on cardholder's observed behavior. The card embedded information 211 represents a static embedding storing historical transactional behavior of a card.

Additionally, or alternatively, the context information 213 may be used to train the model to capture relevant transaction-environment conditions that existed at the time of the transaction. In one embodiment, the context information 213 may be designed as combinations of the features of an offer or other incentive which are encoded into corresponding vectors. For example, each offer may be represented as a four-dimensional vector $V(a, b, c, d)$, e.g., the vector V may include features encoded with the following parameters: parameter a corresponding to a category class, parameter b corresponding to the class of progress percentage (%), parameter c corresponding to the class of proximity, and category d corresponding to the class of historical redemption.

The vector V may be used to represent the context of any transaction in the transaction database 20. In one embodiment, the Category parameter may indicate an active offer classification, e.g., whether a merchant offer active in the past is currently active. The Progress % parameter may be based on the current amount of money that the account holder has spent regarding that offer-relative to the minimum spend value, e.g., Progress % = (Current spend for that offer/Minimum spend value to be eligible for that offer) * 100. The Proximity parameter may indicate the period since the account holder was sent last engagement reminder, e.g., the number of days since the account holder was notified (e.g., by mail, email, text, etc.) of the offer. The Historical Redemption parameter may indicate a percentage of the number of times a current offer category was redeemed by the account holder in the past relative to the number of total previous opportunities the account holder had to redeem the offer.

Each of the vectors may be stacked in order to generate the context information of the transaction for use in training the LSTM RNN 220. Hence, the context vector may be generated by an $n$ x 4 dimensional matrix, where $n$ corresponds to the number of distinct offers during a campaign period.

Using the above information, the LSTM/RNN 220 may be trained to predict transaction behavior of cardholders associated with each account of interest, across a plurality of markers in the payment network. For example, the transaction trends include learning a transaction pattern, a non-limiting example of which includes learning a distribution of an expenditure pattern relating to accounts over time and correlated to multiple MCCs and transaction amount bins. The correlations of accounts to MCCs and transaction amount bins may serve as the basis for the predictions and subsequent linking of existing or future incentives to accounts. Thus, the MCCs along with transaction amount bins may serve as markers for the prediction model. A marker is denoted by {MCC}_{txn_amount_bin} i.e. mcc of the merchant concatenated with the amount bin of the transaction. For instance, a marker 6011_500 represents a transaction occurring at mcc 6011 (ATM) and having amount under 500$ bin. In this respect, the neural network may be trained not only as a predictor, but also as a classifier, for learning patterns of the account relating to these bins.

The training results in generation of a probability density function 230 of the LSTM RNN 220 for performing the predictions. In one application, the probability density function 230 may generate predictions of times of future transactions 240, which the holder of an account will likely make, and the specific merchants, or MCC bin(s) 250, that are expected to coincide with the times of future transactions 240. Based on these predictions, the transaction manager 40 (and/or merchant or card issuer) may target the accounts of card holders to receive account features, including but not limited to promotional offers, discounts, rewards, etc., and other benefits through the payment network. In an example embodiment, the transaction manager 40 automatically transmits a notification of a feature to an owner of an account (and/or merchant or card issuer) based on the changing of the state of the account, which in some embodiments is additionally based on the generated predictions of the probability density function 230. The notification of a feature is represented in FIG. 1 as arrow 60 and may take the form of any known communication protocol, non-limiting examples of which include an email, text or automated telephone call.

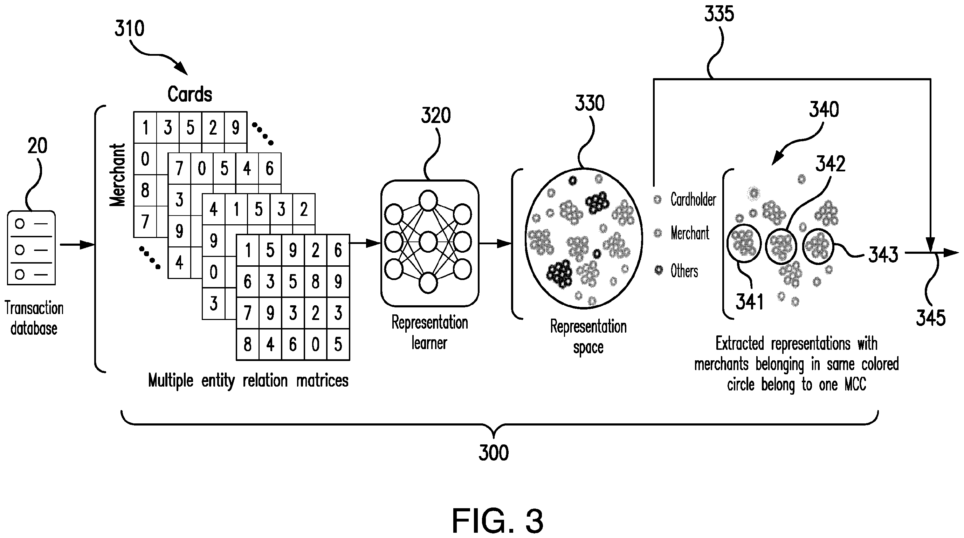

FIG. 3 illustrates an embodiment of the training (learning) process of the LSTM RNN 220 and how, once trained, the predictions and classifications may be implemented when put into use by the credit card company. As shown in FIG. 3, presentation learner 300 includes a plurality of context-relation matrices 310, a representation learner processor 320, an output representation space 330 and an extracted group of representations 340. In accordance with aspects of the present disclosure, in some non-limiting example embodiments, representation learner processor 320 is trained once and is then used to learn embeddings of cardholders and merchants (aggregated to form MCC's embeddings).

A process performed by representation learner 300 may include the controller 45 receiving information from the transaction database 20 and then processing the transaction information from the transaction database 20 into a plurality of context-relation matrices 310.

Training of the probability density function (learned by the TPP model) includes feeding three important types information at each time step (t) to the model. The first type of information includes a cardholder transacting at time t. The second type of information includes a corresponding merchant being transacted at by that cardholder at time t. The third type of information includes a context of the involved cardholder and merchant at time t, which is generated using the redemption history database. This information is fed to the TPP model in a chronological order to learn the probability density function.

The transaction database 20 includes, as previously indicated, information relating to transactions for accounts of the credit card company in the past. This information includes not only the transaction information but also the marker(s) relating to each transaction. In one embodiment, the markers are designed in such a way that, for each transaction, the MCC of the merchant involved in the transaction is recorded, along with the amount of the transaction. The MCC may therefore provide an indication of the types of transactions that took place by merchant type and, in some cases, the specific types of goods or services purchased.

Taking the transactions collectively, a plurality of MCC-based groups ($M_i$) may be generated for the information in the transaction database 20 along with a plurality of transaction amount groups (or bins) for each of the MCCs. This may be performed on a per-account basis and also across accounts in the payment network, based on operations performed by the transaction manager 40. As an example, twenty to thirty MCC-based groups may be formed with four or five transaction-amount bins. When combined, this produces a total of 80 to 150 markers, which may be mathematically expressed as ($M_iT_j$), where $M_i$ represents the $i^{th}$ merchant bin and $T_j$ represents the $j^{th}$ transaction amount bin for the $i^{th}$ MCC group.

The context-relation matrices 310 may correspond to vector representations of cards that indicate transactional behavior of corresponding accounts in the payment network. These vector representations may be determined, for example, by generating multiple-entity relationship matrices that define relationships that exist between merchants participating in the payment network and various network (e.g., card) accounts.

The context-relation matrices 310 differ from the four-dimensional vector V(a, b, c, d) discussed above in that V(a,b,c,d) represents the dynamic context vector, which is cardholder and merchant specific and varies with time. On the other hand, the context-relation matrices 310 are static representations for card holders which include historical transaction behavior of that cardholder.

The multiple-entity relation matrices may be mathematically expressed as $M_i \in M$ between cards and merchants in terms of predetermined domain-specific relationships (e.g., tf-idf frequency measure (or frequency-inverse document frequency) of card and merchant encounters) from the transaction database. For example, in one embodiment, an entity relation matrix of a card (C) verses merchant (S) may have a transaction amount filled in the position of $C_i$ and $S_j$. Other types of entity relation matrices may also be generated to capture the effects of various factors on representations between cards and merchants. Examples include entity relation matrices of merchant identification (ID) verses industry, entity relation matrices of merchants ID versus geographical location (e.g., zip code), entity relation matrices of card verses product category, and/or entity relation matrices of card versus card bin. In one embodiment, entity relation matrices may be generated to include card versus bucketed lifetime value variables matrix for each channel.

The historical redemption information is considered while learning the probability density function (in the TPP model). The context fed to the TPP model at each time step is generated using this historical redemption database and is crucial when learning the probability density function.

A representation learner 320 may be used to learn the representations of the entities indicated in the entity relation matrices. In one embodiment, representation learner 320 may implement an extended skip-gram model with negative sampling may be used to capture information from all of the generated entity relation matrices.

The representation learner 320 is just one non-limiting example of the many known methods used to learn card and merchant's representation. It should be noted that any known method used to learn card and merchant's representation, with similar learning capacity, can be used in in accordance with aspects of the present disclosure. A non-limiting example of the operations performed by the representation learner 320, including the operations the extended skip-gram model performs with negative sampling to capture information from the matrices are described in the following coded algorithm:

$$x\_t = \text{card\_emb} \| \text{time\_of\_the\_transaction} \| \text{context\_embedding}$$

$$\text{input\_gate}_t = \tanh (W_f * [h_{t-1} \| x_t ] + b_i )$$

$$\text{forget\_gate}_t = \tanh (W_f * [h_{t-1} \| x_t ] + b_f )$$

$$\text{output\_gate}_t = \tanh (W_o * [h_{t-1} \| x_t ] + b_o )$$

$$\text{cell\_state}'_t = \tanh (Wc* [h_{t-1} | |x_t] + b_c )$$

$$\text{cell\_state}_t = \text{forget\_gate}_t * \text{cell\_state}_{t-1} + \text{input\_gate}_t * \text{cell\_state}'_t$$

$$\text{output\_time} = w_i * \text{cell\_state}_t + bi$$

$$\text{outputMCCBin} = \text{softmax}(w'_i * \text{cell}_2\text{state}_t + b'_i )$$

$$Loss = \sum \alpha(|T - output\_time|) + \beta(\sum_{across\_all\_bins} |TrueMCCBin - outputMCCBin|).$$

The representation learned by the representation learner 320 captures the information of an entity (cardholder or merchant) present in their cross relation matrices. For example, the representation learner 320 embeds the information in a cross-relation matrices describing the distribution of transaction amount of a card holder (i.e. (i,j) of a matrix will have the count of transactions done by the ith cardholder, where the transaction amount falls under the jth amount bin) in a vector form, which will represent the transaction frequency of a cardholder in each of the ticket size bins. Multiple such cross relation matrices may be created and the representation learner 320 embeds the information from each of these cross relation matrices of the vector of an entity (card or merchant).

It should be noted that the probability density function is not related to the representation learner 320. The LSTM network regress time of the next transaction and MCC bin directly, whereas the extended skip gram model is derived from the example algorithm discussed above.

A representation space 330 may then be generated based on the relationships learned by the representation learner 320. The controller 45 may generate the representation space 330 by initializing the embedding of each entity randomly in the same space to generate clusters of merchants, clusters of cardholders, and optionally clusters of other types of related information. This may be accomplished by iterating over each $M_i \in M$ and sampling a number (e.g., 2) entities of corresponding entity-type. A set of context entities may be negatively sampled from the set of entities, and then their embeddings are updated using, for example, a gradient descent technique. These embeddings denote the cardholder's vectorized representation. These representations are initialized randomly, which continuously updates while training.

Groups of representations 340 may then be extracted on an MCC basis. For example, in the representation space corresponding to the group of representations 340, three circled groups 341, 342 and 343 of representations are shown as an example. Each circled group corresponds to merchants in the payment network having the same MCC. The data 335 from the representation space 330 is provided both to the group of reorientations 340 and to the output of presentation learner 300 to provide an output data set 345.

After the training is completed, the learned density function may be used to predict the MCC bin and time of upcoming transaction that may be considered relevant for given account (or card holder). For example, the learned density function may be used to predict the time and marker ($M_iT_j$) of an upcoming transaction of an account conditioned on the context. The context may be, for example, a feature of a set of offers, rewards, incentives, etc., that are valid for a certain period of time.

The marker output in the form of ($M_iT_j$) may then be used to calculate the total amount of transactions made by a card of the account at an MCC. This may be accomplished based on the following equation:

$$\text{Amount spent} @M_i = |M_iT_1| * T_1 + |M_iT_2| * T_2 + \cdots + |M_iT_5| * T_5$$

where $|M_iT_j|$ represents the cardinality of $M_iT_j$.

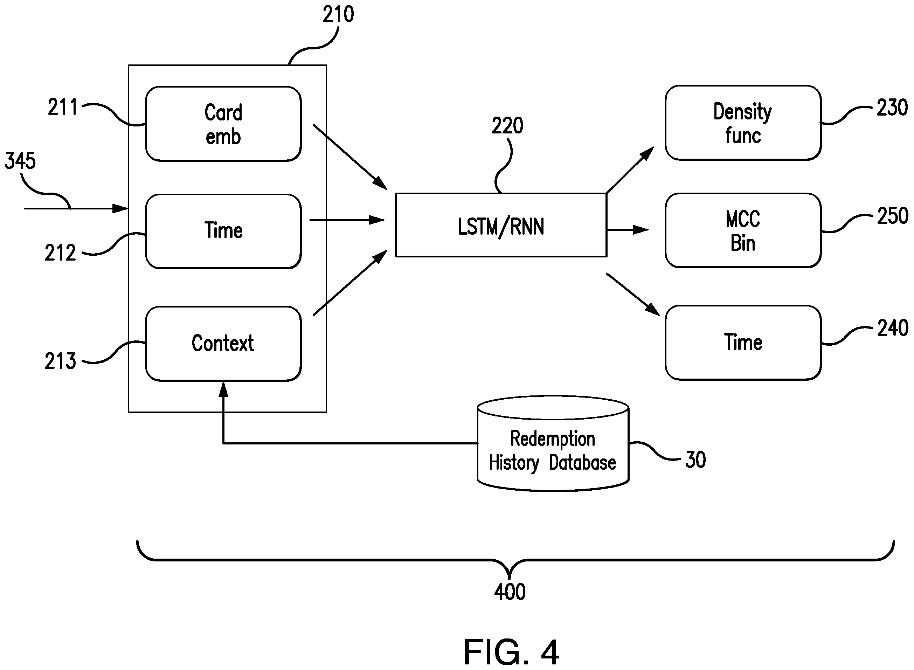

FIG. 4 represents an embodiment of the density learning model.

As shown in the figure, the output data set 345, from presentation learner 300 discussed above with reference to FIG. 3, is provided to datasets 210. Further, redemption data, for example from redemption history database 30, is provided to 213. LSTM RNN 220 then processes the data from datasets 210, including the output data set 345 and the data from redemption history databased 30 to output the current data for MCC bin(s) 250. The output from MCC bin(s) 250 includes data related to the next MCC of the transaction and the bin in which the amount of the transaction falls.

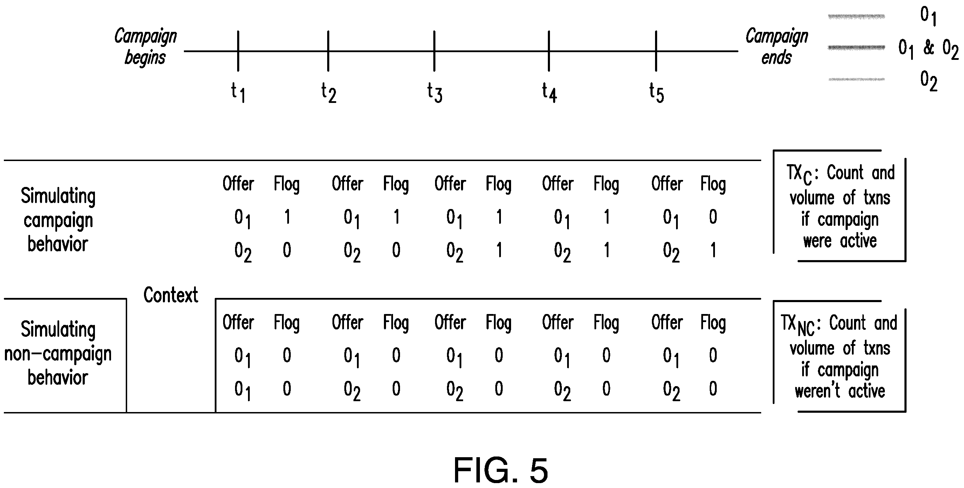

FIG. 5 shows an example application of the LSTM RNN model for customer loyalty optimization. In this embodiment, the case is taken where a loyalty campaign is performed by a card company seeking to link accounts (e.g., cardholders) and merchants who are providing (or have scheduled to provide) discounts, rewards, etc., for card purchases. For illustrative purposes, one merchant who is making an offer will be considered.

In one embodiment, the context vector input into the model may be modified in accordance with the prevailing offer. In FIG. 5, a status indicator in the form of an Offer Flag may indicate whether the offer-related attributes are provided in the context vector. The model outputs the predicted expenditure (or transaction) behavior of the account associated with the card during the period of the campaign.

To model the expenditure, the Offer Flag would have a first value (e.g., 1) when the campaign (or offer) is launched, e.g., active. The Offer Flag would have a second value (e.g., 0) when the campaign (or offer) is not launched. In this latter case, the offer attributes are not included in the context vector. These two behaviors may be compared to monitor the lift in the expenditure of targeted customers resulting from the campaign. The effect of an individual offer may also be determined by manipulating the Offer Flag during a simulation.

To quantify the success of the campaign, a plurality of metrics may be defined. One metric may be transaction volume (Txn volume), corresponding to a change in the overall transaction value at corresponding MCC group that may be predicted. For example, an increase in the overall transaction value at a MCC group may denote a positive effect of the provided offer to the cardholder. Another metric may be transaction count (Txn count), corresponding to the number of transactions during the campaign period. Another metric may be number of offer redemptions. This criterion may be defined, for example, for a market testing stage of deployment. An overall increase in the number of offers redeemed by a card connected to an account may indicate a better, more optimal form of offer targeting.

The methods, processes, and/or operations described herein may be performed by code or instructions to be executed by a computer, processor, controller, or other signal processing device. The computer, processor, controller, or other signal processing device may be those described herein or one in addition to the elements described herein. Because the algorithms that form the basis of the methods (or operations of the computer, processor, controller, or other signal processing device) are described in detail, the code or instructions for implementing the operations of the method embodiments may transform the computer, processor, controller, or other signal processing device into a special-purpose processor for performing the methods described herein.

The controllers, processors, logic, estimators, selectors, schedulers, prediction engines, and other signal generating and signal processing features of the embodiments described herein may be implemented in non-transitory logic which, for example, may include hardware, software, or both. When implemented at least partially in hardware, the controllers, processors, logic, estimators, selectors, schedulers, prediction engines, and other signal generating and signal processing features may be, for example, any one of a variety of integrated circuits including but not limited to an application-specific integrated circuit, a field-programmable gate array, a combination of logic gates, a system-on-chip, a microprocessor, or another type of processing or control circuit.

When implemented in at least partially in software, the controllers, processors, logic, estimators, selectors, schedulers, prediction engines, and other signal generating and signal processing features may include, for example, a memory or other storage device for storing code or instructions to be executed, for example, by a computer, processor, microprocessor, controller, or other signal processing device. The computer, processor, microprocessor, controller, or other signal processing device may be those described herein or one in addition to the elements described herein. Because the algorithms that form the basis of the methods (or operations of the computer, processor, microprocessor, controller, or other signal processing device) are described in detail, the code or instructions for implementing the operations of the method embodiments may transform the computer, processor, controller, or other signal processing device into a special-purpose processor for performing the methods described herein.

Also, another embodiment may include a computer-readable medium, e.g., a non-transitory computer-readable medium, for storing the code or instructions described above. The computer-readable medium may be a volatile or non-volatile memory or other storage device, which may be removably or fixedly coupled to the computer, processor, controller, or other signal processing device which is to execute the code or instructions for performing the method embodiments or operations of the apparatus embodiments described herein.

Any reference in this specification to an "embodiment" means that a particular feature, structure, or characteristic described in connection with the embodiment is included in at least one embodiment of the disclosure. The appearances of such phrases in various places in the specification are not necessarily all referring to the same embodiment. Further, when a particular feature, structure, or characteristic is described in connection with any embodiment, it is submitted that it is within the purview of one skilled in the art to affect such feature, structure, or characteristic in connection with other ones of the embodiments. The features of any one embodiment may be combined with features of one or more other embodiments described herein to form additional embodiments.

Furthermore, for ease of understanding, certain functional blocks may have been delineated as separate blocks; however, these separately delineated blocks should not necessarily be construed as being in the order in which they are discussed or otherwise presented herein. For example, some blocks may be able to be performed in an alternative ordering, simultaneously, etc.

Although a number of illustrative embodiments are described herein, it should be understood that numerous other modifications and embodiments can be devised by those skilled in the art that will fall within the spirit and scope of the principles of this invention. More particularly, reasonable variations and modifications are possible in the component parts and/or arrangements of the subject combination arrangement within the scope of the foregoing disclosure, the drawings and the appended claims without departing from the spirit of the invention. In addition to variations and modifications in the component parts and/or arrangements, alternative uses will also be apparent to those skilled in the art.

The following clauses (not claims) define further aspects of the invention:

1. A non-transitory, computer-readable media having computer-readable instructions stored thereon, the computer-readable instructions being capable of being read by a transaction manager configured to execute instructions stored on a memory, wherein the computer-readable instructions are capable of instructing the transaction manager to perform the method comprising:

learning a transaction pattern of an account over time;
generating a transfer function based on the transaction pattern;

predicting information for the account based on the density function;
changing a state of the account based on the predicted information; and

automatically transmitting a notification of a feature to an owner of the account based on the changing of the state of the account,
wherein the transfer function is a probability density function of a neural network and
wherein the information includes a time of a future transaction linked to a correlated marker of the payment network.

2. The non-transitory, computer-readable media of 1, wherein the computer-readable instructions are capable of instructing the transaction manager to perform the method wherein learning the transaction pattern includes: learning a distribution of an expenditure pattern relating the account over time.

3. The non-transitory, computer-readable media of 1 or 2, wherein the computer-readable instructions are capable of instructing the transaction manager to perform the method further comprising training the probability density function by:

providing information related to a cardholder of the account transacting at time t;
providing information related to a merchant being transacted at by the cardholder at time t; and providing a context of the cardholder and the merchant at time t.

4. The non-transitory, computer-readable media of 1, 2 or 3, wherein the computer-readable instructions are capable of instructing the transaction manager to perform the method wherein predicting the information includes: predicting transactions behavior of the account during a period.

**Claims**

1. A system for managing a payment network, comprising:

   a memory configured to store instructions of a predictor model; and
   a transaction manager configured to execute the instructions to:

   learn a transaction pattern of an account over time;
   generate a transfer function based on the transaction pattern;
   predict information for the account based on the density function;
   change a state of the account based on the predicted information; and
   automatically transmit a notification of a feature to an owner of the account based on the changing of the state of the account,

   wherein the transfer function is a probability density function of a neural network and wherein the information includes a time of a future transaction linked to a correlated marker of the payment network.

2. The system of claim 1, wherein the transaction manager is configured to execute the instructions to additionally learn the transaction pattern by:
   learning a distribution of an expenditure pattern relating the account over time.

3. The system of claim 1 or claim 2, wherein the transaction manager is configured to execute the instructions to additionally train the probability density function by:

   providing information related to a cardholder of the account transacting at time t;
   providing information related to a merchant being transacted at by the cardholder at time t; and
   providing a context of the cardholder and the merchant at time t.

4. The system of any preceding claim, wherein the transaction manager is configured to execute the instructions to additionally predict the information by:
   predicting transactions behavior of the account during a period.

5. The system of any preceding claim, wherein the transaction manager is configured to execute the instructions to additionally change the state of the account by:
   linking the account to a vector attribute of the future transaction for the correlated marker.

6. The system of claim 5, wherein the feature includes at least one of a discount, offer, conditional reward, or incentive of a merchant corresponding to the correlated marker.

7. The system of any preceding claim, wherein the correlated marker corresponds to a merchant category code (MCC) of the payment network.

8. The system of any preceding claim, wherein the offer is an existing or future offer provided by a merchant in the MCC corresponding to the correlated marker.

9. A method for managing a payment network, comprising:

learning a transaction pattern of an account over time;
generating a transfer function based on the transaction pattern;
predicting information for the account based on the density function;
changing a state of the account based on the predicted information; and
automatically transmitting a notification of a feature to an owner of the account based on the changing of the state of the account,
wherein the transfer function is a probability density function of a neural network and wherein the information includes a time of a future transaction linked to a correlated marker of the payment network.

10. The method of claim 9, wherein learning the transaction pattern includes:
learning a distribution of an expenditure pattern relating the account over time.

11. The method of claim 9 or claim 10, further comprising training the probability density function by:

providing information related to a cardholder of the account transacting at time t;
providing information related to a merchant being transacted at by the cardholder at time t; and
providing a context of the cardholder and the merchant at time t.

12. The method of any of claims 9, 10 or 11, wherein predicting the information includes:
predicting transactions behavior of the account during a period.

13. The method of any of claims 9 to 12, wherein changing the state of the account includes:
linking the account to a vector attribute of the future transaction for the correlated marker, and optionally or preferably wherein the feature includes at least one of a discount, offer, conditional reward, or incentive of a merchant corresponding to the correlated marker.

14. The method of any of claims 9 to 13, wherein the correlated marker corresponds to a merchant category code (MCC) of the payment network and/or wherein the offer is an existing or future offer provided by a merchant in the MCC corresponding to the correlated marker.

15. A non-transitory, computer-readable media having computer-readable instructions stored thereon, the computer-readable instructions being capable of being read by a transaction manager configured to execute instructions stored on a memory, wherein the computer-readable instructions are capable of instructing the transaction manager to perform the method of any of claims 9 to 14.

FIG. 1

EP 4 246 407 A1

FIG. 2

Multiple entity relation matrices

Representation learner

Representation space

Extracted representations with merchants belonging in same colored circle belong to one MCC

Cardholder
Merchant
Others

Cards

Merchant

Transaction database

FIG. 3

EP 4 246 407 A1

FIG. 4

EP 4 246 407 A1

Timeline: **Campaign begins** — $t_1$, $t_2$, $t_3$, $t_4$, $t_5$ — **Campaign ends**

Legend:
- $O_1$
- $O_1$ & $O_2$
- $O_2$

**Simulating campaign behavior** — Context

| | Offer | Flag | Offer | Flag | Offer | Flag | Offer | Flag | Offer | Flag | |
|---|---|---|---|---|---|---|---|---|---|---|---|
| Simulating campaign behavior | $O_1$ | 1 | $O_1$ | 1 | $O_1$ | 1 | $O_1$ | 1 | $O_1$ | 0 | $TX_C$: Count and volume of txns if campaign were active |
| | $O_2$ | 0 | $O_2$ | 0 | $O_2$ | 1 | $O_2$ | 1 | $O_2$ | 1 | |
| Simulating non-campaign behavior | $O_1$ | 0 | $O_1$ | 0 | $O_1$ | 0 | $O_1$ | 0 | $O_1$ | 0 | $TX_{NC}$: Count and volume of txns if campaign weren't active |
| | $O_1$ | 0 | $O_2$ | 0 | $O_2$ | 0 | $O_2$ | 0 | $O_2$ | 0 | |

FIG. 5

Europäisches
Patentamt

European
Patent Office

Office européen
des brevets

# EUROPEAN SEARCH REPORT

Application Number

EP 23 16 1328

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/116599 A1 (GUPTA SHEETANSHU [IN] ET AL) 27 April 2017 (2017-04-27) * the whole document * | 1-15 | INV. G06Q30/0202 G06Q30/0207 |
| A | Anonymous: "Probability density function - Wikipedia", , 23 February 2022 (2022-02-23), XP093057017, Retrieved from the Internet: URL:https://en.wikipedia.org/w/index.php?title=Probability_density_function&oldid=1073532349 [retrieved on 2023-06-22] * the whole document * | 1-15 | |

TECHNICAL FIELDS
SEARCHED       (IPC)

G06Q

The present search report has been drawn up for all claims

| Place of search | Date of completion of the search | Examiner |
|---|---|---|
| The Hague | 5 July 2023 | Lutz, Andreas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 16 1328

This annex lists the patent family members relating to the patent documents cited in the above-mentioned European search report.
The members are as contained in the European Patent Office EDP file on
The European Patent Office is in no way liable for these particulars which are merely given for the purpose of information.

05-07-2023

| Patent document cited in search report | Publication date | Patent family member(s) | Publication date |
|---|---|---|---|
| US 2017116599 A1 | 27-04-2017 | AU 2016346804 A1 | 19-04-2018 |
| | | AU 2016380941 A1 | 17-05-2018 |
| | | CA 3009336 A1 | 06-07-2017 |
| | | CN 108431847 A | 21-08-2018 |
| | | SG 10201508866S A | 30-05-2017 |
| | | SG 10201510818R A | 30-05-2017 |
| | | US 2017116599 A1 | 27-04-2017 |
| | | US 2017193515 A1 | 06-07-2017 |
| | | WO 2017074663 A1 | 04-05-2017 |
| | | WO 2017116794 A1 | 06-07-2017 |

EPO FORM P0459

For more details about this annex : see Official Journal of the European Patent Office, No. 12/82